# EUROPÄISCHE PATENTANMELDUNG

(11) **EP 2 862 847 A1**
(43) Veröffentlichungstag der Anmeldung: **22.04.2015**
(21) Anmeldenummer: 13189524.5
(22) Anmeldetag: 21.10.2013
(51) Int. Cl.: C04B 26/16, C08G 18/22

(54) **Verfahren zur Herstellung einer Harzmischung auf Basis von Vinylesterurethanharzen, diese enthaltender Reaktionsharzmörtel und deren Verwendung**

(71) Anmelder: HILTI Aktiengesellschaft, 9494 Schaan (LI)
(72) Erfinder: Khalyavina, Anna, 86159 Augsburg (DE); Wieland, Philipp, 80935 München (DE); Leitner, Michael, 86899 Landsberg (DE)
(74) Vertreter: Hilti Aktiengesellschaft Corporate Intellectual Property

(57) **Zusammenfassung**

Es wird verbessertes Verfahren zur Herstellung einer Harzmischung umfassend einen Harz-Masterbatch mit einem Vinylesterurethanharz als Basisharz, mindestens einen Polymerisationsinhibitor, mindestens einen Beschleuniger und gegebenenfalls mindestens einen Reaktivverdünner, beschrieben, das folgende Schritte umfasst: (i) Herstellen des Harz-Masterbatches durch Umsetzen einer Isocyanatverbindung mit mindestens einer hydroxyfunktionalisierten (Meth)acrylatverbindung in Anwesenheit eines geeigneten Katalysators; (ii) Zugeben mindestens eines Beschleunigers für die Härtungsreaktion des gebildeten Basisharzes und (iii) Zugeben mindestens eines Reaktivverdünners während und/oder nach Schritt (i). Ferner wird eine Harzmischung, die durch das beschriebene Verfahren erhältlich ist, einen diese Harzmischung enthaltenden Reaktionsharzmörtel sowie dessen Verwendung für die chemische Befestigung beschrieben.

## Beschreibung

Die Erfindung betriff ein Verfahren zur Herstellung einer Harzmischung auf Basis von Vinylesterurethanharzen als Basisharze, insbesondere einer Harzmischung umfassend ein Vinylesterurethanharz, mindestens einen Polymerisationsinhibitor und mindestens einen Beschleuniger für die Härtungsreaktion und gegebenenfalls mindestens einen Reaktivverdünner und einen diese Harzmischung enthaltenden Reaktionsharzmörtel sowie deren Verwendung zur chemischen Befestigung.

Es ist bekannt, Massen mit einem Gehalt an radikalisch härtbaren, Vinylesterurethanharzen, insbesondere Urethan(meth)acrylatharzen für die spreizdruckfreie Befestigung von Ankerstangen in Bohrlöchern zu verwenden, wie beispielsweise in der DE 39 40 309 A1 beschrieben.

Vinylesterurethanharzesind flüssige bis feste bzw. in Lösungsmitteln, wie Reaktivverdünnern, lösliche, lineare oder verzweigte Polyurethane, die Acrylat- und/oder Methacrylatgruppen enthalten. Verbindungen dieses Typs und deren Herstellung sind bekannt (vgl. z. B. DE 35 36 246 A1, EP 01 23 081 A1 und EP 00 02 129 A1 und die darin herangezogene Literatur). Vinylesterurethanharze können durch radikalische Polymerisation bzw. Copolymerisation mit dem (den) Reaktivverdünner(n) vernetzt bzw. ausgehärtet werden.

Die Vinylesterurethanharze, insbesondere die Urethan(meth)acrylatharze können z.B. durch Umsetzung von di- und/oder höherfunktionellen Isocyanaten mit geeigneten hydroxyfunktionalisierten (Meth)acrylverbindungen, gegebenenfalls unter Mitverwendung von Hydroxyverbindungen, die mindestens zwei Hydroxygruppen enthalten, hergestellt werden. Diese Umsetzung erfolgt üblicherweise in Anwesenheit eines geeigneten Katalysators, wie Organozinnverbindungen insbesondere Dibutylzinndilaurat, welches hinsichtlich seiner Reaktivität und Selektivität besonders bevorzugt ist.

Die üblicherweise zur Herstellung von Urethanharzen, insbesondere Urethan(meth)acrylatharzen verwendeten Organozinn-Katalysatoren sind allerdings kritisch und weisen Gesundheitsgefahren auf, da viele davon toxisch sind.

Aus der Publikation "Catalysis of the Isocyanate-Hydroxyl Reaction with Non-Tin Catalysts" von W. J. Blank. Z. A. He und E. T. Hessell, 24th International Conference in Organic Coatings, Athens Greece sind organische Metallsalze und Chelate beschrieben, die für die Herstellung von Urethanverbindungen geeignet sind, wobei explizit folgende Verbindungen genannt werden: Chrom(III)dionat, Chrom(III)octoat, Titantetrabutoxid, Calciumoctoat, Bismuthcarboxylat, Zirkoniumacetoacetat, Zirkoniumtetradionat-Komplex und Zirkoniumtetrakis(2,4-pentanedionato)-Komplex. In der WO 2012/076686 A1 werden weitere ähnliche Verbindungen genannt, die ebenfalls für die Herstellung von Urethanharzen geeignet sind, wobei Zirkoniumalkoxide, wie Zirkoniumtetrabutoxid, und Zirkoniumcarboxylate, wie Zirkoniumtetraacetylacetonat, als besonders effektiv beschrieben werden.

Die genannten Katalysatoren haben zum Teil erhebliche Nachteile, welche deren Einsatzbereich je nach Anforderung an die Verwendung der herzustellenden Urethanharze einschränken können: hierunter sind die Erhöhung der Viskosität der Reaktionsmischung, eine sehr geringe Selektivität bei der Reaktion der Isocyanatverbindungen mit Wasser bzw. mit mehrwertigen Hydroxyverbindungen, wobei eine vergleichbare Reaktionsgeschwindigkeit beobachtet wurde, zu nennen. Ferner wurde bei Reaktionsharzmörteln, d.h. anorganisch gefüllten Reaktionsharz-Zusammensetzungen, ein deutlicher Einfluss auf die Gelzeit und die Gelzeitstabilität nach Lagerung beobachtet, wobei sowohl eine Verlängerung als auch eine Verkürzung der Gelzeit beobachtet wurde. Nachdem es sich bei den genannten Verbindungen um Metallverbindungen handelt, die einen erheblichen Einfluss auch auf die Aushärtung der damit hergestellten Harze haben können, insbesondere, wenn die Reaktionslösung der Harzherstellung ohne Aufarbeitung direkt für die Herstellung von Harzmischungen und Reaktionsharzmassen Verwendung findet, so dass der Katalysator in der Zusammensetzung verbleibt, ist deren Auswirkung auf die Aushärtung der Harzzusammensetzungen nicht vorhersehbar. Viele der bekannten Verbindungen eignen sich zwar als Katalysator für die Umsetzung von Isocyanatverbindungen mit primären Hydroxyverbindungen, sind jedoch für die Umsetzung von Isocyanatverbindungen mit sekundären Hydroxyverbindungen wesentlich weniger effektiv. Wie auch die Organozinn-Katalysatoren weisen einige der in den beiden Publikationen genannten Katalysatoren eine vergleichbare oder zum Teil sogar erhöhte Toxizität auf.

Es bestand demnach die Aufgabe, weitere Katalysatoren für die Herstellung von Urethanen bzw. Vinylesterurethanharzen bereitzustellen, welche keine oder eine verminderte Toxizität aufweisen und dabei eine selektive und schnelle Umsetzung der verwendeten Isocyanatverbindungen sowohl mit primären als auch mit sekundären Hydroxyverbindungen gewährleistet, ohne dabei die Aushärtung der damit hergestellten Harzzusammensetzungen negativ zu beeinflussen.

Diese Aufgabe wird durch die Verwendung eines Katalysators gelöst, der aus der Gruppe ausgewählt ist, die aus Zinkalkoxiden, wie Zinkneodekanoat und Zinkoctoat, Zinkcarboxylaten, wie Zinkacetylacetonat, Zinkoxalat und Zinkacetat, Zirkoniumoctoat und Eisenacetylacetonat besteht.

Zum besseren Verständnis der Erfindung werden die folgenden Erläuterungen der hierin verwendeten Terminologie als sinnvoll erachtet. Im Sinne der Erfindung bedeutet:
- "*Basisharz*" die reine, härtende bzw. härtbare Verbindung, die für sich oder mit Reaktionsmitteln, wie Härter, Beschleuniger und dergleichen (nicht im Basisharz enthalten), durch Polymerisation härten; die härtbaren Verbindungen können Monomere, Dimere, Oligomere und Präpolymere sein;
- "*Harz-Masterbatch*" das Produkt der Herstellung des Basisharzes nach der Synthese (ohne Isolierung des Basisharzes) welches Reaktivverdünner, Stabilisatoren und Katalysatoren enthalten kann;
- "*Harzmischung*" eine Mischung aus dem Harz-Masterbatch und Beschleunigern sowie Stabilisatoren und ggf. weiteren Reaktivverdünnern; dieser Begriff wird gleichbedeutend mit dem Begriff "*organisches Bindemittel*" verwendet;
- "*Reaktionsharzmörtel*" eine Mischung aus Harzmischung und anorganischen Zuschlagstoffen; hierfür wird gleichbedeutend der Begriff "A Komponente" verwendet;
- "*Härtungsmittel*" Stoffe, welche die Polymerisation (das Härten) des Basisharzes bewirken;
- "*Härter*" eine Mischung aus Härtungsmittel und organischen und/oder anorganischen Zuschlagstoffen;
- "*Beschleuniger*" eine zur Beschleunigung der Polymerisationsreaktion (Härtung) fähige Verbindung, die dazu dient, die Bildung des Radikalstarters zu beschleunigen;
- "*Polymerisationsinhibitor*" eine zur Inhibierung der Polymerisationsreaktion (Härtung) fähige Verbindung, die einmal dazu dient, die Polymerisationsreaktion und damit ein unerwünschtes vorzeitiges Polymerisieren der radikalisch polymerisierbaren Verbindung während der Lagerung zu vermeiden, wobei diese Verbindungen üblicherweise in so geringen Mengen eingesetzt werden, dass die Gelzeit nicht beeinflusst wird; andererseits dient der Polymerisationsinhibitor dazu, die Polymerisationsreaktion unmittelbar nach der Zugabe des Härtungsmittels zu verzögern, wobei die Verbindungen üblicherweise in solchen Mengen eingesetzt werden, dass die Gelzeit beeinflusst wird;
- "*Reaktivverdünner*" flüssige oder niedrigviskose Basisharze, welche andere Basisharze, den Harz-Masterbatch oder die Harzmischung verdünnen und dadurch die zu deren Applikation notwendige Viskosität verleihen, zur Reaktion mit dem Basisharz befähigte funktionelle Gruppen enthalten und bei der Polymerisation (Härtung) zum überwiegenden Teil Bestandteil der gehärteten Masse (Mörtel) werden; auch co-polymerisierbares Monomer genannt.
- "*Gelzeit*" für ungesättigte Polyester- oder Vinyl-Harze, welche gewöhnlich mit Peroxiden gehärtet werden, die Zeit der Härtungsphase des Harzes, in der sich die Temperatur des Harzes von +25°C auf +35°C erhöht. Dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;
- "*Gelzeitdrift*" (für einen bestimmten ausgewählten Zeitraum, zum Beispiel 30 oder 60 Tage), das Phänomen, dass, wenn die Härtung zu einem anderen Zeitpunkt als zu dem Referenz-Standardzeitpunkt der Härtung, beispielsweise 24 Stunden nach der Herstellung des Reaktionsharzes, bzw. der Reaktionsharzmasse, die beobachtete Gelzeit von der zum Zeitpunkt der Referenz abweicht;
- "*Mörtelmasse*" eine Formulierung, die neben der Reaktionsharzmasse weitere organische und/oder anorganische Füllstoffe enthält und die als solches direkt zur chemischen Befestigung verwendet werden kann;
- "*Zweikomponenten-Mörtelsystem*" ein System, das eine A Komponente, den Reaktionsharzmörtel, und eine B Komponente, den Härter, umfasst, wobei die beiden Komponenten reaktionsinhibierend getrennt gelagert sind, so dass eine Härtung des Reaktionsharzmörtels erst nach deren Mischen erfolgt;
- "*(Meth)acryl...*/*...(meth)acryl...*", dass sowohl die "Methacryl.../...methacryl..."- als auch die "Acryl.../...acryl..."-Verbindungen umfasst sein sollen;
- "*kalthärtend*", dass eine bzw. und ein Reaktionsharzmörtel bei Raumtemperatur vollständig aushärten kann.

Reaktionsharzmörtel werden in der Regel hergestellt, indem die zur Herstellung des Basisharzes erforderlichen Ausgangsverbindungen gegebenenfalls zusammen mit Katalysatoren und Lösungsmitteln, insbesondere Reaktivverdünnern, in einen Reaktor gegeben und miteinander zur Reaktion gebracht werden. Nach Beendigung der Reaktion und gegebenenfalls bereits zu Beginn der Reaktion können dem Reaktionsgemisch Polymerisationsinhibitoren zur Verhinderung der vorzeitigen Polymerisation, auch Stabilisatoren genannt, zugegeben werden, wodurch der sogenannte Harz-Masterbatch erhalten wird. Zu dem Harz-Masterbatch werden häufig Beschleuniger für die Härtung des Basisharzes, gegebenenfalls zusätzliche Polymerisationsinhibitoren, die gleich oder ungleich dem Stabilisator für die Lagerstabilität sein können, zur Einstellung der Gelzeit, und gegebenenfalls weiteres Lösungsmittel, insbesondere Reaktivverdünner, gegeben, wodurch die Harzmischung erhalten wird. Diese Harzmischung wird zur Einstellung verschiedener Eigenschaften, wie der Rheologie und der Konzentration des Basisharzes, mit anorganischen Zuschlagstoffen versetzt, wodurch der Reaktionsharzmörtel erhalten wird.

Eine bevorzugte Harzmischung enthält dementsprechend mindestens ein Basisharz, mindestens einen Reaktivverdünner, mindestens einen Beschleuniger und mindestens einen Polymerisationsinhibitor. Ein Reaktionsharzmörtel enthält bevorzugt neben der eben beschriebenen Harzmischung organische und/oder anorganische Zuschlagstoffe, wobei anorganische Zuschlagstoffe besonders bevorzugt sind, wie sie nachfolgend näher beschrieben werden.

Ein erster Gegenstand der Erfindung betrifft ein Verfahren zur Herstellung einer Harzmischung umfassend einen Harz-Masterbatch mit einem Vinylesterurethanharz, insbesondere einem Urethan(meth)acrylatharz als Basisharz, mindestens einen Polymerisationsinhibitor, mindestens einen Beschleuniger und gegebenenfalls mindestens einen Reaktivverdünner.

Das Verfahren umfasst folgende Schritte: (i) Herstellen des Harz-Masterbatches durch Umsetzen einer Isocyanatverbindung mit mindestens einer hydroxyfunktionalisierten (Meth)acrylatverbindung in Anwesenheit eines Katalysators, wobei der Katalysator aus der Gruppen von Verbindungen ausgewählt ist, die aus Zinkalkoxiden, wie Zinkneodekanoat und Zinkoctoat, Zinkcarboxylaten, wie Zinkacetylacetonat, Zinkoxalat und Zinkacetat, Zirkoniumoctoat und Eisenacetylacetonat besteht; (ii) Zugeben mindestens eines Beschleunigers für die Härtungsreaktion des gebildeten Basisharzes und (iii) Zugeben mindestens eines Reaktivverdünners.

Der Katalysator wird bevorzugt in einer Menge von 1 bis 5.000 ppm, bezogen auf das Basisharz, eingesetzt.

In einer ersten Ausführungsform der Erfindung wird der Harz-Masterbatch durch Umsetzen einer Isocyanatverbindung mit mindestens einer hydroxyfunktionalisierten (Meth)acrylatverbindung in Anwesenheit des Katalysators und gegebenenfalls eines Reaktivverdünners erhalten.

Als Isocyanate können aliphatische (cyclische oder lineare) und/oder aromatische di- oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di- oder höherfunktionelle Isocyanate bzw. Präpolymere davon, wobei aromatische di- oder höherfunktionelle Präpolymere besonders bevorzugt sind. Beispielhaft können Toluylendiisocyanat (TDI), Diisocyanatodiphenylmethan (MDI) und polymeres Diisocyanatodiphenylmethan (pMDI) zur Erhöhung der Kettenversteifung und Hexandiisocyanat (HDI) und Isophorondiisocyanat (IPDI), welche die Flexibilität verbessern, sowie TDI- und HDI-Trimere genannt werden, worunter MDI und pMDI besonders bevorzugt sind.

Als hydroxyfunktionalisierte (Meth)acrylverbindungen sind Acrylsäure und am Kohlenwasserstoffrest substituierte Acrylsäuren wie Methacrylsäure, hydroxylgruppenhaltige Ester der (Meth)acrylsäure mit mehrwertigen Alkoholen, Pentaerythrittri(meth)acrylat, Glyceroldi(meth)acrylat, wie Trimethylolpropandi(meth)acrylat, Neopentylglycolmono(meth)acrylat geeignet. Bevorzugt sind (Meth)acrylsäurehydroxylalkylester, wie Hydroxyethyl(meth)acrylat, 2-Hydroxypropyl(meth)acrylat, 2-Hydroxybutyl(meth)acrylat, 3-Hydroxybutyl(meth)acrylat, 2-Hydroxycyclohexyl(meth)acrylat, Glycerol-1,3-di(meth)acrylat, Polyoxyethylen(meth)acrylat und Polyoxypropylen(meth)acrylat, zumal solche Verbindungen der sterischen Hinderung der Verseifungsreaktion dienen.

In dieser Ausführungsform wird die hydroxyfunktionalisierte (Meth)acrylatverbindung bevorzugt in solch einer Menge eingesetzt, dass pro Mol Isocyanatgruppe mindestens ein Mol der hydroxyfunktionalisierten (Meth)acrylatverbindung eingesetzt wird. Gewöhnlich wird ein leichter Überschuss an der hydroxyfunktionalisierten (Meth)acrylatverbindung eingesetzt, um eine nahezu vollständige Reaktion zu gewährleisten, so dass nur ein äußerst geringer Anteil an freien Isocyanatgruppen nach der Umsetzung verbleibt. Damit soll unter anderem verhindert werden, dass die noch freien Isocyanatgruppen mit dem zur Herstellung der Harzmischung gegebenenfalls zuzugebenden Reaktivverdünner bei der Aushärtung des Harzes co-polymerisieren.

Alternativ kann erfindungsgemäß die hydroxyfunktionalisierte (Meth)acrylatverbindung in einem deutlichen Überschuss eingesetzt werden, wobei der nicht mit der Isocyanatverbindung reagierende Teil als Reaktivverdünner für die Umsetzung sowie für das gebildete Vinylesterurethanharz, insbesondere Urethan(meth)acrylatharz fungiert.

In einer weiteren Ausführungsform des erfindungsgemäßen Verfahrens wird in Schritt (i) als Isocyanatverbindung ein Zwischenprodukt verwendet, das durch Umsetzen der Isocyanatverbindung mit mindestens einer di- oder höherfunktionellen Hydroxyverbindung in Anwesenheit des Katalysators und gegebenenfalls eines Reaktivverdünners erhältlich ist.

Als di- oder höherfunktionelle Hydroxyverbindungen sind folgende geeignet: zwei- oder höherwertige Alkohole, z. B. Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol-A bzw. -F bzw. deren Oxethylierungs- und/oder Hydrierungs- bzw. Halogenierungsprodukte, höherwertige Alkohole, wie z. B. Glycerin, Trimethylolpropan, Hexantriol und Pentaerythrit, hydroxygruppenhaltige Polyether, z. B. Oligomere aliphatischer oder aromatischer Oxirane und/oder höherer cyclischer Ether, z. B. Ethylenoxid, Propylenoxid, Styroloxid und Furan, Polyether, die in der Hauptkette aromatische Struktureinheiten enthalten, z. B. die des Bisphenol A bzw. F, hydroxygruppenhaltige Polyester auf Basis der obengenannten Alkohole bzw. Polyether und Dicarbonsäuren bzw. ihrer Anhydride, z. B. Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung bzw. Erhöhung der Wärmeformbeständigkeit (WFB) des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Vinylesterurethane zur Erzielung niedrigerer Viskosität der Harze bzw. ihrer Lösungen in Reaktivverdünnern und höherer Reaktivität und Vernetzungsdichte.

Die Menge der optional zu verwendenden weiteren di- oder höherfunktionellen Hydroxyverbindung kann sehr stark variieren, solange ein Überschuss an Isocyanatgruppen verbleibt. Das Molverhältnis zwischen den Hydroxygruppen der Hydroxyverbindung und der Isocyanatgruppen ist im allgemeinen größer als 0,01, stärker bevorzugt größer als 0,05 und noch stärker bevorzugt größer als 0,1. Das Molverhältnis zwischen den Hydroxylgruppen der Hydroxyverbindung und den Isocyanatgruppen ist bevorzugt kleiner als 0,95, stärker bevorzugt kleiner als 0,9 und noch stärker bevorzugt kleiner als 0,7.

In einer besonders bevorzugten Ausführungsform des erfindungsgemäßen Verfahrens wird der Harz-Masterbatch durch Mischen einer Isocyanatverbindung mit dem Katalysator und gegebenenfalls mit mindestens einer weiteren di- oder höherfunktionellen Hydroxyverbindung, um eine Reaktion zwischen der Isocyanatverbindung und der Hydroxyverbindung zu erlauben und um ein erstes Zwischenprodukt zu erhalten, und anschließendes Zugeben der hydroxyfunktionalisierten (Meth)acrylatverbindung, um eine Reaktion zwischen den Zwischenprodukt und der hydroxyfunktionalisierten (Meth)acrylatverbindung zu erlauben und um das Vinylesterurethanharz zu erhalten, erhalten. Bevorzugt werden die jeweiligen Umsetzungen bei einer Temperatur zwischen 20°C und 90°C durchgeführt.

Das erhaltene Vinylesterurethanharz hat jeweils bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

Diese Harze können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Zur Stabilisierung gegen vorzeitige Polymerisation der Monomere sowie des erhaltenen Vinylesterurethanharzes kann die Harzmischung einen Polymerisationsinhibitor enthalten, wie er nachfolgend näher erläutert ist. Der Polymerisationsinhibitor ist hierzu bevorzugt in einer Menge von 0,0005 bis 2 Gew.-%, stärker bevorzugt 0,01 bis 1 Gew.-% in der Harzmischung enthalten.

Der Polymerisationsinhibitor kann vor oder während der Umsetzung der Isocyanatverbindung mit der hydroxyfunktionalisierten (Meth)acrylatverbindung zu dem Reaktionsgemisch gegeben werden.

Der Harz-Masterbatch kann gegebenenfalls bereits mindestens einen Reaktivverdünner enthalten. Dabei kann, wie bereits erwähnt, der Überschuss an hydroxyfunktionalisierter (Meth)acrylatverbindung als Reaktivverdünner fungieren. Daneben, wenn die hydroxyfunktionalisierte (Meth)acrylatverbindung in etwa äquimolaren Mengen mit der Isocyanatgruppe eingesetzt wird, oder zusätzlich, falls ein Überschuss an hydroxyfunktionalisierte (Meth)acrylatverbindung verwendet wird, können weitere Reaktivverdünner dem Reaktionsgemisch zugegeben werden, welche strukturell von dem hydroxyfunktionalisierten (Meth)acrylatverbindung verschieden sind.

Geeignete Reaktivverdünner sind niederviskose, radikalisch co-polymerisierbare Verbindungen, bevorzugt kennzeichungsfreie Verbindungen, die zugegeben werden um unter anderem die Viskosität der Vinylesterurethanharze bzw. der Vorstufen bei deren Herstellung anzupassen, falls erforderlich.

Geeignete Reaktivverdünner sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt aliphatische oder aromatische C₅-C₁₅-(Meth)acrylate ausgewählt werden. Geeignete Beispiele umfassen: Hydroxypropyl(meth)acrylat, 1,2-Ethandioldi(meth)acrylat, 1,3-Propandioldi(meth)acrylat, 1,2-Butandioldi(meth)acrylat, 1,4-Butandioldi(meth)acrylat, Trimethylolpropantri(meth)acrylat, Phenethyl(meth)acrylat, Tetrahydrofurfuryl(meth)acrylat, Ethyltriglykol(meth)acrylat, *N,N*-Dimethylaminoethyl(meth)acrylat, *N,N-*Dimethylaminomethyl(meth)acrylat, Acetoacetoxyethyl(meth)acrylat, Isobornyl(meth)acrylat, 2-Ethylhexyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.1.0.^{2.6}-decan, 3-(Meth)cyclopentadienyl(meth)acrylat, Isobornyl(meth)acrylat und Decalyl-2-(meth)acrylat; PEG-di(meth)acrylate, wie PEG200-di(meth)acrylat, Tetraehtylenglykoldi(meth)acrylat, Solketal(meth)acrylat, Cyclohexyl(meth)acrylat, Phenoxyethyldi(meth)acrylat, Methoxyethyl(meth)acrylat, Tetrahydrofurfuryl(meth)acrylat, *tert*-Butyl(meth)acrylat und Norbornyl(meth)acrylat. Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie *tert*-Butylstyrol, Divinylbenzol und Allylverbindungen, wobei die nicht kennzeichnungspflichtigen Vertreter davon bevorzugt sind.

Ein weiterer Gegenstand der Erfindung betrifft eine Harzmischung, welche einen Harz-Masterbatch, wie er eben beschrieben wurde, mindestens einen Beschleuniger für die Härtungsreaktion des Vinylesterurethanharzes und gegebenenfalls mindestens einen weiteren Polymerisationsinhibitor und mindestens einen weiteren Reaktivverdünner enthält.

Der Anteil des Harz-Masterbatches wird dabei so gewählt, dass die Menge des Basisharzes zwischen 20 und 100 Gew.-%, bevorzugt zwischen 20 und 60 Gew.-%, bezogen auf die Harzmischung, entspricht.

Bevorzugt wird die Härtung des Harzbestandteils mit einem Radikalinitiator, etwa einem Peroxid initiiert. Dementsprechend wird der Harzmischung ein Beschleuniger zugegeben. Hierdurch werden schnellhärtende Reaktionsharzmörtel erhalten, die bei Raumtemperatur aushärten (kalthärtend). Geeignete Beschleuniger, die gewöhnlich der Harzmischung zugegeben werden, sind dem Fachmann bekannt. Diese sind beispielsweise Amine, bevorzugt tertiäre Amine und/oder Metallsalze.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, *tert-*Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N,N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Aiethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, a-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diamino-dimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydropxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxyalkyl)anilin mit Dicarbonsäuren oder durch Polyaddition von Ethylenoxid und diese Amine erhalten werden, sind ebenso als Beschleuniger geeignet.

Geeignete Metallsalze sind, zum Beispiel Cobaltoctoat oder Cobaltnaphthenoat sowie Vanadium-, Kalium-, Kalzium-, Kupfer-, Mangan- oder Zirkoniumcarboxylate.

Sofern ein Beschleuniger verwendet wird, wird er in einer Menge von 0,01 bis 10 Gew.-%, bevorzugt 0,2 bis 5 Gew.-%, bezogen auf die Harzmischung, eingesetzt.

Die Harzmischung kann ferner einen Co-Beschleuniger enthalten, insbesondere, wenn eine Übergangsmetallverbindung als Beschleuniger verwendet wird. Abhängig von der gewählten Übergangsmetallverbindung ist der Fachmann in der Lage, einen geeigneten Co-Beschleuniger auszuwählen, um die gewünschten Aushärteeigenschaften zu erreichen. Wird eine Kobaltverbindung als Beschleuniger verwendet, ist der Co-Beschleuniger bevorzugt ein Amin und/oder eine 1,3-Dioxoverbindung. Wird eine Kupferverbindung als Beschleuniger verwendet, ist der Co-Beschleuniger bevorzugt ein Amin, ein Acetoacetamid, ein Kaliumsalz, ein Imidazol und/oder ein Gallat oder Gemische davon. Wird eine Manganverbindung als Beschleuniger verwendet, ist der Co-Beschleuniger bevorzugt eine 1,3-Dioxoverbindung, ein Thiol und/oder ein Kalium- oder Lithiumsalz oder Gemische davon. Wird eine Eisenverbindung als Beschleuniger verwendet, ist der Co-Beschleuniger bevorzugt eine 1,3-Dioxoverbindung und/oder ein Thiol, bevorzugt in Kombination mit einem Alkalimetallsalz. Geeignete 1,3-Dioxoverbindungen sind Acetylaceton, Acetoacetate und Acetoacetamide.

Die Menge an Co-Beschleuniger in der Harzmischung kann stark variieren und liegt bevorzugt im Bereich von mehr als 0,01 Gew.-% und weniger als 10 Gew.-%, bevorzugt mehr als 0,1 Gew.-% und weniger als 5 Gew.-%.

Der Beschleuniger und gegebenenfalls der Co-Beschleuniger kann/können zusammen mit dem gegebenenfalls weiteren Reaktivverdünner einzeln oder als Gemisch dem Harz-Masterbatch zugegeben werden. Alternativ, kann der Beschleuniger gegebenenfalls zusammen mit dem Co-Beschleuniger dem bereits mit Reaktivverdünner versetzten Harz-Masterbatch zugegeben werden.

Die Harzmischung kann ferner zur Einstellung der Gelzeit und der Reaktivität zusätzlich 0,005 bis 3 Gew.-%, vorzugsweise 0,05 bis 1 Gew.-% eines Polymerisationsinhibitors enthalten.

Als Polymerisationsinhibitoren sind erfindungsgemäß die für radikalisch polymerisierbare Verbindungen üblicherweise verwendeten Polymerisationsinhibitoren geeignet, wie sie dem Fachmann bekannt sind.

Zur Stabilisierung gegen vorzeitige Polymerisation enthalten Harzmischungen und Reaktionsharzmörtel üblicherweise Polymerisationsinhibitoren, wie Hydrochinon, substituierte Hydrochinone, z.B. 4-Methoxyphenol, Phenothiazin, Benzochinon oder *tert-*Butylbrenzkatechin, wie beispielsweise in der EP 1935860 A1 oder EP 0965619 A1 beschrieben werden, Nitroxylverbindungen, insbesondere stabile Nitroxylradikale, auch N-Oxyl-Radikale genannt, wie Piperidinyl-N-oxyl oder Tetrahydropyrrol-N-oxyl, wie sie in der DE 19531649 A1 beschrieben sind. Besonders bevorzugt wird 4-Hydroxy-2,2,6,6-tetramethylpiperidin-N-oxyl (im Folgenden als Tempol bezeichnet) zur Stabilisierung verwendet, was den Vorteil hat, dass damit auch die Gelzeit eingestellt werden kann.

Bevorzugt sind die Polymerisationsinhibitoren unter phenolischen Verbindungen und nicht-phenolischen Verbindungen, wie stabilen Radikalen und/oder Phenothiazinen, ausgewählt.

Als phenolische Polymerisationsinhibitoren, die oft Bestandteil von kommerziellen radikalisch härtenden Reaktionsharzen sind, kommen Phenole, wie 2-Methoxyphenol, 4-Methoxyphenol, 2,6-Di-*tert*-butyl-4-methylphenol, 2,4-Di-*tert*-butylphenol, 2,6-Di-*tert-*butylphenol, 2,4,6-Trimethylphenol, 2,4,6-Tris(dimethylaminomethyl)phenol, 4,4'-Thio-bis(3-methyl-6-*tert*-butylphenol), 4,4'-Isopropylidendiphenol, 6,6'-Di-*tert*-butyl-4,4'-bis(2,6-di-*tert*-butylphenol), 1,3,5-Trimethyl-2,4,6-tris(3,5-di-*tert*-butyl-4-hydroxybenzyl)benzol, 2,2'-Methylen-di-*p*-cresol, Brenzkatechin und Butylbrenzkatechine, wie 4-*tert-*Butylbrenzkatechin, 4,6-Di-*tert*-butylbrenzkatechin, Hydrochinone, wie Hydrochinon, 2-Methylhydrochinon, 2-*tert*-Butylhydrochinon, 2,5-Di-*tert*-butylhydrochinon, 2,6-Di-tert-butylhydrochinon, 2,6-Dimethylhydrochinon, 2,3,5-Trimethylhydrochinon, Benzochinon, 2,3,5,6-Tetrachlor-1,4-benzochinon, Methylbenzochinon, 2,6-Dimethylbenzochinon, Naphthochinon, oder Gemische von zweien oder mehreren davon, in Frage.

Als nicht-phenolische Polymerisationsinhibitoren kommen vorzugsweise Phenothiazine, wie Phenothiazin und/oder Derivate oder Kombinationen davon, oder stabile organische Radikale, wie Galvinoxyl- und *N*-Oxyl-Radikale in Betracht.

Geeignete stabile *N*-Oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden, wie sie in der DE199 56 509 beschrieben sind. Ferner sind geeignete *N*-Oxylverbindungen Oxime, wie Acetaldoxim, Acetonoxim, Methylethylketoxim, Salicyloxim, Benzoxim, Glyoxime, Dimethylglyoxim, Aceton-*O*-(benzyloxycarbonyl)oxim und dergleichen. Ferner können in para-Position zur Hydroxylgruppe substituierte Pyrimidinol- oder Pyridinol-Verbindungen, wie sie in der nicht vorveröffentlichten Patentschrift Anmeldung DE 10 2011 077 248 B1 beschrieben sind als Polymerisationsinhibitoren verwendet werden.

Die Polymerisationsinhibitoren können, abhängig von den gewünschten Eigenschaften und der Verwendung der Harzmischung, entweder alleine oder als Kombination von zweien oder mehreren davon verwendet werden. Die Kombination der phenolischen und der nicht-phenolischen Polymerisationsinhibitoren ermöglicht dabei einen synergistischen Effekt, wie auch die Einstellung einer im Wesentlichen driftfreien Einstellung der Gelierzeit der Reaktionsharzformulierung zeigt.

In einer Ausführungsform der Erfindung kann die Harzmischung ferner weitere Reaktivverdünner enthalten. Alternativ ist es auch möglich, den mindestens einen Reaktivverdünner vollständig erst nach Erhalt des Harz-Masterbatches zuzugeben, um die verdünnte Harzmischung zu erhalten.

Der Reaktivverdünner kann dabei dieselbe Verbindung sein, wie sie für die Umsetzung mit der Isocyanatverbindung verwendet wird. Er kann auch davon unterschiedlich sein. Ferner kann der bereits dem Harz-Masterbatch zugegebene Reaktivverdünner, welcher sich von der für die Harzsynthese verwendeten hydroxyfunktionalisierten (Meth)acrylatverbindung unterscheidet, ein anderer sein, wie er dem Harz-Masterbatch nach dessen Herstellung zugegeben wird.

Der mindestens eine Reaktivverdünner kann in einer Menge von 0 bis 80 Gew.-%, vorzugsweise 40 bis 80 Gew.-%, bezogen auf die Harzmischung, dieser zugegeben werden. Ein Teil davon kann bereits aus dem Harz-Masterbatch stammen.

Ein weiterer Gegenstand der Erfindung betrifft einen Reaktionsharzmörtel, der neben der eben beschriebenen Harzmischung anorganische und/oder organische Zuschlagstoffe enthält, wie Füllstoffe und/oder weitere Additive.

Der Anteil der Harzmischung in dem Reaktionsharzmörtel beträgt bevorzugt 10 bis 70 Gew.-%, stärker bevorzugt 30 bis 50 Gew.-%.

Dementsprechend beträgt der Anteil der Zuschlagstoffe in dem Reaktionsharzmörtel bevorzugt 30 bis 90 Gew.-%, stärker bevorzugt 50 bis 70 Gew.-%.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Füllstoffe liegen in der jeweiligen Komponente vorzugsweise in einer Menge von bis zu 90, insbesondere 3 bis 85, vor allem 5 bis 70 Gew.-% vorhanden.

Weitere mögliche Additive sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können, vorzugsweise in einer Menge bis zu 30 Gew.-%, bezogen auf die jeweilige Komponente (Reaktionsharzmörtel, Härter), beispielsweise von 1 bis 20 Gew.-%, vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, oder Wasser.

Der Reaktionsharzmörtel kann als Zwei- oder Mehrkomponenten-System, insbesondere Zweikomponenten-System konfektioniert sein, wobei der Harzbestandteil und der Härterbestandteil reaktionsinhibierend getrennt angeordnet sind. Dementsprechend enthält eine erste Komponente, die A-Komponente, den Reaktionsharzmörtel und eine zweite Komponente, die B-Komponente, den Härter. Hierdurch wird erreicht, dass die härtbaren Verbindungen und das Härtungsmittel erst unmittelbar vor der Anwendung miteinander gemischt werden und die Härtungsreaktion auslösen.

Der Härter enthält das Härtungsmittel zur Initiierung der Polymerisation (Härtung) des Harzbestandteils. Dieses ist, wie bereits erwähnt, ein Radikalinitiator, bevorzugt ein Peroxid.

Alle dem Fachmann bekannten Peroxide, die zum Härten von ungesättigten Polyesterharzen und Vinylesterharzen verwendet werden, können erfindungsgemäß zur Härtung der Vinylesterurethanharze eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel -C(O)OOC(O)-), Dialkylperoxide (der Formel -OO- und dergleichen. Diese können auch als Oligomer oder Polymer vorliegen. Eine umfassende Reihe an Beispielen für geeignete Peroxide ist zum Beispiel in der Anmeldung US 2002/0091214-A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie *tert-*Butylhydroperoxid, und andere Hydroperoxide, wie Cumenhydroperoxid, Peroxyester oder Persäuren, wie tert-Butylperester, Benzoylperoxid, Peracetate und Perbenzoate, Laurylperoxid, einschließlich (Di)peroxyesters, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden ist. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) verwendet.

Die Peroxide werden dabei in Mengen von 0,1 bis 10 Gew.-%, bevorzugt 0,1 bis 3 Gew.% und stärker bevorzugt unter 1 Gew.-%, bezogen auf den Reaktionsharzmörtel, eingesetzt.

Bevorzugt enthält der Härter des Zweikomponenten-Mörtelsystems ferner anorganische Zuschlagstoffe, wobei die Zuschlagstoffe dieselben sind, wie sie dem Reaktionsharzmörtel zugegeben werden können sowie auch Wasser oder andere flüssige Hilfsmittel.

Die Zuschlagstoffe werden dabei in Mengen von 20 bis 90 Gew.-%, bevorzugt 50 bis 80 Gew.-%, bezogen auf die Härterkomponente eingesetzt.

Bei einer besonders bevorzugten Ausführungsform eines Zweikomponenten-Mörtelsystems enthält die A-Komponente neben dem Reaktionsharzmörtel zusätzlich noch eine hydraulisch abbindende oder polykondensierbare anorganische Verbindung und die B-Komponente neben dem Härtungsmittel noch Wasser. Derartige Mörtelmassen sind ausführlich in DE 42 31 161 A1 beschrieben. Dabei enthält die A-Komponente vorzugsweise als hydraulisch abbindende oder polykondensierbare anorganische Verbindung Zement, beispielsweise Portlandzement oder Aluminatzement, wobei eisenoxidfreie oder eisenoxidarme Zemente besonders bevorzugt sind. Als hydraulisch abbindende anorganische Verbindung kann auch Gips als solcher oder in Mischung mit dem Zement eingesetzt werden. Als polykondensierbare anorganische Verbindung können auch silikatische, polykondensierbare Verbindungen, insbesondere lösliches, gelöstes und/oder amorphes Siliziumdioxid enthaltende Stoffe verwendet werden.

Das Zweikomponenten-Mörtelsystem umfasst bevorzugt die A-Komponente und die B-Komponente reaktionsinhibierend getrennt in unterschiedlichen Behältern, beispielsweise einer Mehrkammer-Vorrichtung, wie eine Mehrkammer-Patrone und/oder -Kartusche, aus welchen Behältern die beiden Komponenten durch Einwirkung mechanischer Presskräfte oder unter Einwirkung eines Gasdruckes ausgepresst und vermischt werden. Eine weitere Möglichkeit besteht darin, das Zweikomponenten-Mörtelsystem als Zweikomponenten-Kapseln zu konfektionieren, die in das Bohrloch eingeführt werden und durch schlagdrehendes Setzen des Befestigungselements zerstört werden unter gleichzeitiger Durchmischung der beiden Komponenten der Mörtelmasse. Vorzugsweise wendet man ein Patronensystem oder ein Injektionssystem an, bei dem die beiden Komponenten aus den getrennten Behältern ausgepresst und durch einen statischen Mischer geführt werden, in dem sie homogen vermischt und dann über eine Düse vorzugsweise direkt in das Bohrloch ausgetragen werden.

Die erfindungsgemäß hergestellte Harzmischung und der Reaktionsharzmörtel finden vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern, insbesondere in Bohrlöchern in verschiedenen Untergründen, insbesondere mineralische Untergründe, wie solche auf der Grundlage von Beton, Porenbeton, Ziegelwerk, Kalksandstein, Sandstein, Naturstein und dergleichen.

Die folgenden Beispiele dienen der weiteren Erläuterung der Erfindung.

### AUSFÜHRUNGSBEISPIELE

### Beispiel 1 und Vergleichsbeispiele A bis C

282,7 g Diphenylmethandiisocyanat werden mit der geeigneten Menge eines Katalysators (s. Tabelle 1) versetzt. 39,3 g Dipropylenglycol werden langsam unter kräftigem Rühren zugetropft wobei die Innentemperatur auf ca. 70 °C ansteigt. Nach Beendigung der Zugabe werden 0,1 g Phenothiazin sowie 0,09 g Tempol zugegeben und noch 30 min gerührt, wobei die Temperatur nicht unter 40°C fallen darf. Anschließend werden 677,6 g Hydroxypropylmethacrylat bei ca. 40°C zugetropft. Die Innentemperatur steigt durch Exothermie auf ca. 115°C. Der Reaktionsansatz wird nach Beendigung des Zutropfens noch solange weiter gerührt, bis der NCO-Gehalt unter 1 % gefallen ist (Titration; DIN EN 1242). Die Zeit t_{1%} bis zum Erreichen dieses Grenzwertes ist ein Maß für die Aktivität des Katalysators (Ergebnisse s. Tabelle 1).

Nach Beendigung Reaktion wird die Reaktivität des späteren Harzes mittels aromatischer Amine als Beschleuniger sowie geeigneter Inhibitoren eingestellt. Abschließend werden noch 587 g 1,4-Butandioldimethacrylat zugegeben und so ein verdünntes Urethanmethacrylatharz erhalten welches z.B. für den Einsatz in chemischen Dübelmassen geeignet ist.

**Tabelle 1:**

| **Beispiel** | **Katalysator** | **Menge Katalysator** | **t_{1%}** |
|---|---|---|---|
| 1 | Zink-isooctoat (TIB KAT® 129) ¹ | 0,09 g | 60 min |
| 2 | Zink-neodecanoat (TIB KAT® 616) ¹ | 0,13 g | 65 min |
| 3 | Bismut-Katalysator (TIB KAT® 718) ¹ | 0,1 g | 56 min |
| A | | | |
| B | Dibutylzinndilaurat (TIB KAT® 218) ¹ | 0,1 g | 61 min |
| C | Dioctylzinndilaurat (TIB KAT® 216) ¹ | 0,12 g | 58 min |

| | | | |
|---|---|---|---|
| ¹ jeweils der TIB Chemicals AG | | | |

Aus den Beispielen ist eindeutig zu erkennen, dass die gewählten Organozinn-freien Katalysatoren (siehe Beispiele 1 und 2) in den jeweiligen Mengen dieselbe Aktivität bei der Umsetzung des Isocyanates mit der Hydroxykomponente gewährleisten. Dies zeigt sich in vergleichbaren Reaktionszeiten, die benötigt werden, um einen Restisocyanatgehalt von weniger als 1 % zu erreichen.

### Beispiel 2 und Vergleichsbeispiele D bis F

714,5 g Hydroxypropylmethacrylat werden vollständig im Reaktor vorgelegt, mit 0,1 g Phenothiazin, 0,1 g Tempol sowie der geeigneten Menge eines Katalysators (s. Tabelle 2) versetzt und auf 60°C erwärmt. Anschließend werden 285 g polymeres Diphenylmethandiisocyanat (pMDI) unter Rühren zugetropft, wobei die Innentemperatur auf ca. 80°C ansteigt. Nach Beendigung der Zugabe wird der Ansatz noch solange weiter gerührt bis der NCO-Gehalt unter 1% gefallen ist (Titration; DIN EN 1242). Die Zeit t_{1%} bis zum Erreichen dieses Grenzwertes ist ein Maß für die Aktivität des Katalysators (Ergebnisse s. Tabelle 2).

Nach Beendigung Reaktion wird die Reaktivität des späteren Harzes mittels aromatischer Amine als Beschleuniger sowie geeigneter Inhibitoren eingestellt. Abschließend werden noch 587 g 1,4-Butandioldimethacrylat zugegeben und so ein verdünntes Urethanmethacrylatharz erhalten welches z.B. für den Einsatz in chemischen Dübelmassen geeignet ist.

**Tabelle 2:**

| **Beispiel** | **Katalysator** | **Menge** | **t_{1%}** |
|---|---|---|---|
| 3 | Zink-isooctoat (TIB KAT® 129) ¹ | 0,1 g | 50 min |
| 4 | Zink-neodekanoat (TIB KAT® 616) ¹ | 0,21 g | 48 min |
| D | Bismut-Katalysator (TIB KAT® 718) ^{1,2} | 0,18 g | 42 min |
| E | Dibutylzinndilaurat (TIB KAT® 218) ¹ | 0,12 g | 41 min |
| F | Dioctylzinndilaurat (TIB KAT® 216) ¹ | 0,14 g | 45 min |

| | | | |
|---|---|---|---|
| ¹ jeweils der TIB Chemicals AG ² Bismut-Katalysator modifiziert, Gemisch aus Metallcarboxylaten | | | |

Aus den Beispielen ist eindeutig zu erkennen, dass die gewählten Organozinn-freien Katalysatoren (Beispiele 2 und D) in den jeweiligen Mengen dieselbe Aktivität bei der Umsetzung des Isocyanates mit der Hydroxykomponente gewährleisten. Dies zeigt sich in vergleichbaren Reaktionszeiten, die benötigt werden, um einen Restisocyanatgehalt von weniger als 1 % zu erreichen.

## Patentansprüche

1. Verfahren zur Herstellung einer Harzmischung umfassend einen Harz-Masterbatch mit einem Vinylesterurethanharz als Basisharz, mindestens einen Polymerisationsinhibitor, mindestens einen Beschleuniger und gegebenenfalls mindestens einen Reaktivverdünner, wobei das Verfahren folgende Schritte umfasst:
(i) Herstellen des Harz-Masterbatches durch Umsetzen einer Isocyanatverbindung mit mindestens einer hydroxyfunktionalisierten (Meth)acrylatverbindung in Anwesenheit eines Katalysators, wobei der Katalysator aus der Gruppen von Verbindungen ausgewählt ist, die aus Zinkalkoxiden, wie Zinkneodekanoat und Zinkoctoat, Zinkcarboxylaten, wie Zinkacetylacetonat, Zinkoxalat und Zinkacetat, Zirkoniumoctoat und Eisenacetylacetonat besteht; und
(ii) Zugeben mindestens eines Beschleunigers für die Härtungsreaktion des gebildeten Basisharzes und
(iii) Zugeben mindestens eines Reaktivverdünners während und/oder nach Schritt (i).

2. Verfahren nach Anspruch 1, wobei in Schritt (i) die Isocyanatverbindung ein Zwischenprodukt ist, das durch Umsetzen der Isocyanatverbindung mit einer di- oder höherfunktionellen Hydroxyverbindung erhältlich ist

3. Verfahren nach Anspruch 1 oder 2, ferner umfassend (iv) das Zugeben mindestens eines Polymerisationsinhibitors vor und/oder während und/oder nach Schritt (i).

4. Verfahren nach einem der vorhergehenden Ansprüche, ferner umfassend (v) das Zugeben eines Co-Beschleunigers für die Härtungsreaktion des Basisharzes.

5. Harzmischung erhalten durch ein Verfahren nach einem der vorhergehenden Ansprüche.

6. Harzmischung nach Anspruch 5, wobei der Katalysator in einer Menge von 1 bis 5.000 ppm, bezogen auf das Basisharz, enthalten ist.

7. Reaktionsharzmörtel umfassend eine Harzmischung nach Anhspruch 5 oder 6 und anorganische und/oder organische Zuschlagstoffe.

8. Reaktionsharzmörtel nach Anspruch 7 umfassend anorganische Zuschlagstoffe, ausgewählt unter Füllstoffen und/oder weiteren Additiven.

9. Verwendung eines Reaktionsharzmörtels nach Anspruch 7 oder 8 als Bindemittel in Mehrkomponenten-Mörtelsystemen.

10. Verwendung nach Anspruch 9 zur chemischen Befestigung.
